# EUROPÄISCHE PATENTANMELDUNG

(11) **EP 1 698 452 A1**
(43) Veröffentlichungstag der Anmeldung: **06.09.2006**
(21) Anmeldenummer: 05405220.4
(22) Anmeldetag: 03.03.2005
(51) Int. Cl.: B32B 3/24, B32B 15/08

(54) **Verbundplatte**

(71) Anmelder: Alcan Technology & Management Ltd., 8212 Neuhausen am Rheinfall (CH)
(72) Erfinder: Meier, Johannes, 8254 Basadingen (CH); Behre, Kurt, 49078 Osnabrück (DE)

(57) **Zusammenfassung**

Bei einer Verbundplatte (10) aus wenigstens einer ein- oder beidseitig mit Deckschichten (14, 16) verklebten Kernplatte (12) aus Kunststoff weist/weisen die Kernplatte/n (12) eine Vielzahl von Öffnungen (18) auf. Ein wesentlicher Vorteil der erfindungsgemässen Verbundplatte mit Kernplatte/n mit Öffnungen gegenüber Verbundplatten nach dem Stand der Technik liegt darin, dass der mit einer gelochten Kernplatte im Vergleich zu einer ungelochten Platte gleicher Dicke eingesparte Kunststoff direkt mit einer Kostensenkung für die Verbundplatte verbunden ist.

## Beschreibung

Die Erfindung betrifft eine Verbundplatte aus wenigstens einer ein- oder beidseitig mit einer Deckschicht verklebten Kernplatte aus Kunststoff.

Verbundplatten aus zwei Aluminium-Deckschichten und einem einlagigen Kunststoffkern sind u. a. wegen ihres gegenüber einer Metallplatte bei vergleichbarer Steifigkeit geringeren Gewichts für verschiedene Anwendungsbereiche bekannt. Beispiele sind etwa Fassadenplatten, Innenausbauten von Schienen-, Strassen- und Wasserfahrzeugen, Verkleidungen aller Art und Displays.

In den letzten Jahren wurden zahlreiche Anstrengungen unternommen, das Gewicht von Leichtbau-Verbundplatten mit metallischen Deckschichten ohne wesentlichen Verlust an Steifigkeit zu verringern.

Bei einer bekannten Verbundplatte besteht der Kern aus geschäumtem Kunststoffmaterial. Die Kosten für die zum Aufschäumen des Kunststoffs benötigten Schäummittel wiegen jedoch die beim Kunststoff eingesparten Kosten ungefähr auf.

Eine weiter bekannte Verbundplatte mit extrem niedrigem Gewicht weist einen Wabenkern aus Metall-, Kunststoff- oder Papierfolien auf. Die Herstellung derartiger Verbundplatten ist jedoch mit hohen Kosten verbunden.

Aus der US-A-6 546 994 ist eine Leichtbau-Verbundplatte mit metallischen Deckblechen und einem mit Kunstharz imprägnierten Kern aus Papier- oder Kunststofffasern bekannt. Zur Gewichtsreduktion ist die Faserkernplatte mit Öffnungen versehen.

In der US-A-4 343 846 ist eine Leichtbau-Verbundplatte mit einer Kernplatte aus gelochtem Balsaholz und Deckschichten aus Aluminium oder Fiberglas of-Der Erfindung liegt die Aufgabe zugrunde, eine Verbundplatte der eingangs genannten Art so weiterzubilden, dass sie bei im wesentlichen gleich bleibenden mechanischen Eigenschaften ein geringeres Gewicht bei gleichzeitig niedrigeren Kosten aufweist.

Zur erfindungsgemässen Lösung der Aufgabe führt, dass die Kernplatte/n eine Vielzahl von Öffnungen aufweist/aufweisen. Der Kern kann aus einer oder mehreren Kernplatten bestehen, d.h. eine oder mehrere Lagen aufweisen.

Nachfolgend werden unter dem Begriff "Kernplatte" sowohl eine einzelne als auch mehrere Kernplatten bzw. einlagige oder mehrlagige Kernplatten verstanden.

Die Öffnungen können eine beliebige Form aufweisen. Sie können regelmässig oder unregelmässig über die Oberfläche der Kernplatte verteilt angeordnet sein. Eine Kernplatte kann auch Öffnungen unterschiedlicher Form und/oder Grösse aufweisen.

Aufgrund der verringerten Schubfestigkeit der mit Öffnungen versehenen Kernplatte weist die erfindungsgemässe Verbundplatte eine gute Verformbarkeit auf

Ein wesentlicher Vorteil der erfindungsgemässen Verbundplatte mit Öffnungen aufweisender Kernplatte gegenüber Verbundplatten nach dem Stand der Technik liegt darin, dass der mit der Kernplatte mit Öffnungen im Vergleich zu einer voll massiven Platte gleicher Dicke eingesparte Kunststoff direkt mit einer Kostensenkung für die Verbundplatte verbunden ist.

Die Kernplatte mit Öffnungen kann beispielsweise durch Ausstanzen der Öffnungen aus einer Kunststoffplatte hergestellt werden. Der beim Stanzvorgang in Form von Granulat anfallende Kunststoff kann direkt wieder in den Produktionsprozess für die Kernplatten zurückgeführt werden.

Eine weitere Möglichkeit zur Erzeugung von Öffnungen in einer Kunststoffplatte besteht darin, eine Vielzahl von die Kunststoffplatte durchdringenden Schlitzen anzuordnen und die geschlitzte Platte anschliessend in warmem Zustand mittels einer mono- oder biaxialen Dehnung zu expandieren.

Zweckmässigerweise sind die Öffnungen regelmässig über die Oberfläche der Kernplatte verteilt angeordnet.

Die ausgestanzte Gesamtfläche der Öffnungen bzw. die Gesamtfläche der durch Dehnung entstandenen Öffnungen entspricht im allgemeinen wenigstens etwa 15 % der Gesamtoberfläche der Kernplatte und liegt bevorzugt bei 40 bis 60 %, insbesondere bei etwa 50 % der Gesamtoberfläche der Kernplatte.

Dem Kunststoff der Kernplatte können Füllstoffe aus flammhemmenden Zusätzen beigefügt sein, d.h. die Kernplatte selbst kann als flammhemmendes Substrat ausgebildet sein. Alternativ können die Öffnungen der Kernplatte mit flammhemmenden Zusätzen, mit Löschmitteln oder mit anderen Füllstoffen gefüllt sein.

Die Deckschichten können aus einem beliebigen Werkstoff bestehen, also beispielsweise aus Kunststoff, Papier, Metall oder aus Laminaten der genannten Materialien, mit und ohne eingebrachte Verstärkungsmaterialien. Bevorzugte Deckschichten sind Metallbleche.

Bei einer besonders bevorzugten erfindungsgemässen Verbundplatte besteht die Kernplatte aus Kunststoffen mit polyolefinischer Basis, beispielsweise aus Polyethylen, insbesondere aus einem Polyethylen mittlerer Dichte (MDPE), mit hohem Anteil an mineralischen Füllstoffen und/oder die Öffnungen können mit flammhemmenden Zusätzen gefüllt sein.

Bevorzugt besteht die Verbundplatte aus wenigstens einer beidseitig mit Deckschichten verklebten Kernplatte.

Die Deckschichten bestehen bevorzugt aus Metallblechen, insbesondere aus Blechen aus Aluminium oder aus einer Aluminiumlegierung.

Die Öffnungen in der Kernplatte können auch als nicht durchgängige Vertiefungen ausgeführt sein, d.h. die Öffnungen durchdringen die Kernplatte nicht vollständig.

Die Dicke der Verbundplatten liegt etwa zwischen 1 und 20 mm, bevorzugt zwischen etwa 3 und 5 mm. Die Dicke der Deckschichten beträgt etwa 0,1 bis 1,2 mm, bevorzugt etwa 0,3 bis 0,5 mm. Der mittlere Durchmesser der Öffnungen in der Kernplatte liegt etwa zwischen 1 und 5 mm, bevorzugt. zwischen etwa 2 und 4 mm. Die Form der Öffnungen kann beliebig sein, also beispielsweise rund oval, elliptisch, rautenförmig oder irgendein regelmässiges oder unregelmässiges Vieleck. Ebenso können die Öffnungen oder Löcher in beliebiger Weise angeordnet sein, z.B. in Reihen oder in anderer regelmässiger oder unregelmässiger Anordnung.

Bei Verwendung von mehreren Kernplatten oder Kernlagen erfolgt deren Verbindung durch Kleben, Schweissen o.ä., wobei die Verbindungsstellen auch mit Geweben oder Folien aus beliebigen Materialien verstärkt sein können. Mit diesen Verstärkungen können Eigenschaften wie Festigkeit, Schallabsorption u.a. des Kernwerkstoffes oder der Verbundplatte bewusst beeinflusst werden.

Um trotz verminderter Klebefläche zwischen den Deckschichten und der mit Öffnungen versehenen Kernplatte eine ausreichende Haftkraft zu erzielen, können die Deckschichten mit einem Primer oder einem Haftvermittler beschichtet oder mit geeigneten Massnahmen zur Vergrösserung der Wirkfläche behandelt worden sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine Verbundplatte mit teilweise entferntem Deckblech;
- Fig. 2 bis 5: Querschnitte durch verschiedene Ausführungen von Verbundplatten in vergrösserter Darstellung;
- Fig. 6: die Draufsicht auf eine Kernplatte mit Schlitzen vor dem Expandieren;
- Fig. 7: eine Schrägsicht auf die expandierte Platte von Fig. 6;
- Fig. 8: einen Querschnitt durch eine Verbundplatte mit zweilagiger Kernplatte.

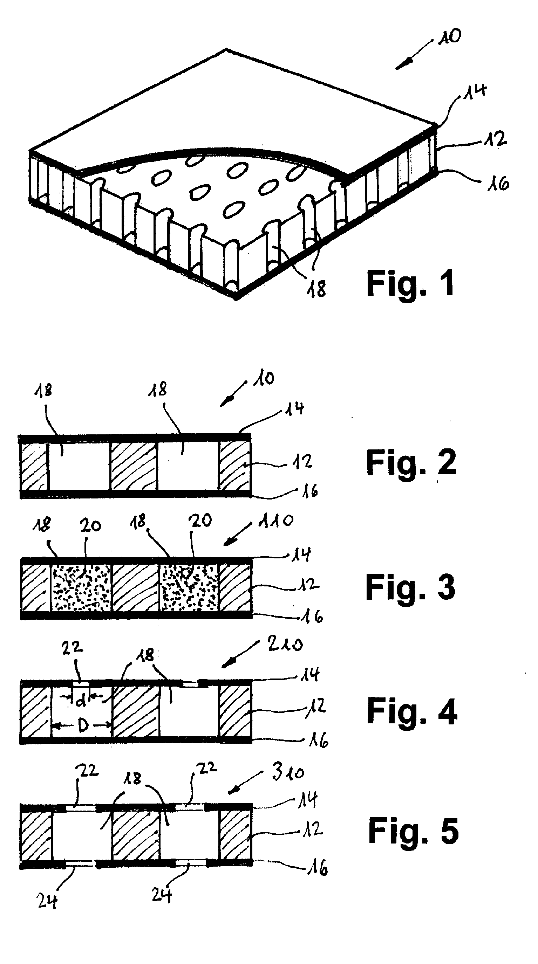

Eine in den Fig. 1 und 2 gezeigte Verbundplatte 10 besteht aus einer Kernplatte 12, beispielsweise aus Polyethylen mittlerer Dichte (MDPE), gegebenenfalls in der Form eines flammhemmenden Substrats mit flammhemmenden Zusätzen, die beidseitig mit je einem Deckblech 14, 16 aus Metall, beispielsweise aus Aluminium oder einer Aluminiumlegierung, verklebt ist. Aus der Kernplatte 12 ist eine Vielzahl von Öffnungen 18 senkrecht zur Plattenebene ausgestanzt. Die Löcher können eine beliebige Form aufweisen und beispielsweise aus kreisrunden, ovalen, vieleckigen oder polygonen, sphärisch konkaven Löchern bestehen. Bei der dargestellten Ausführungsform weisen die beiden Deckbleche 14, 16 keine zusätzlichen Löcher auf und sämtliche Öffnungen 18 in der Kernplatte 12 sind auf beiden Seiten der Kernplatte 12 von den Deckblechen 14, 16 überdeckt.

Die in Fig. 3 gezeigte Verbundplatte 110 entspricht der Verbundplatte 10 von Fig. 1 und 2, mit der Ausnahme, dass die Öffnungen 18 in der Kernplatte 12 mit einem Zuschlagstoff 20, der beispielsweise ein flammhemmender Zusatz oder ein Löschmittel sein kann, gefüllt sind.

Bei der in Fig. 4 dargestellten Verbundplatte 210 ist das obere Deckblech 14 mit Löchern 22 versehen, das untere Deckblech 16 ist ungelocht. Der Durchmesser d der Löcher 22 im Deckblech 14 ist kleiner als der Durchmesser D der Löcher 18 in der Kernplatte 12. Die Löcher 22 im Deckblech 14 und die Löcher 18 in der Kernplatte 12 sind konzentrisch zueinander angeordnet, so dass die Löcher 18 in der Kernplatte 12 vom oberen Deckblech 14 teilweise überdeckt sind. Die Löcher 22 im Deckblech 14 bilden hinterschnittene Öffnungen einer Vielzahl von kleinen Räumen mit schallabsorbierenden Eigenschaften.

Bei der in Fig. 5 gezeigten Verbundplatte 310 weisen beide Deckbleche 14, 16 kreisrunde Löcher 22, 24 auf, wobei die Löcher 22, 24 in den Deckblechen 14, 16 und die Löcher 18 in der Kernplatte 12 konzentrisch zueinander angeordnet sind. Diese Verbundplatte 310 ist damit lichtdurchlässig.

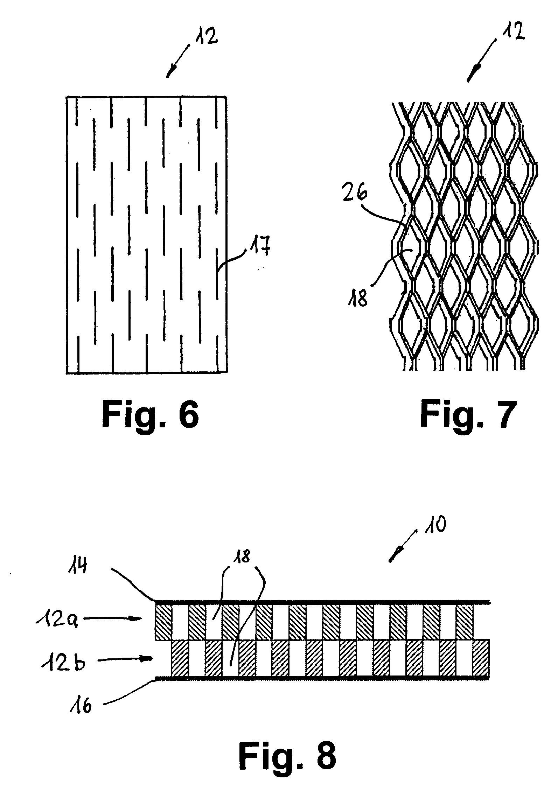

Die in Fig. 6 gezeigte Kernplatte 12 weist eine regelmässige Anordnung von parallelen und versetzt zueinander angeordneten, die Platte 12 durchdringenden Einschnitten oder Schlitzen 17 auf. Durch Dehnen dieser geschlitzten Kernplatte 12 in erwärmtem Zustand quer zur Richtung der Einschnitte 17 entsteht in Analogie zu dem bekannten Streckmetall die in Fig. 7 gezeigte Platte 12 mit Stegen 26 und Zwischenräumen oder Öffnungen 18.

Bei der Verwendung geschlitzter Kernplatten mit dehnfähiger Schnitttechnik ist durch die Öffnung des Kernmaterials durch Expansion mittels eines mono- oder biaxialen Dehnvorganges eine deutliche Vergrösserung der Oberfläche bei geringer Dickenreduzierung und geringerem Materialeinsatz erreichbar. Die Lochung bzw. Schlitzung und Dehnung des Kernmaterials ermöglicht infolge reduzierter Schubspannungen eine dreidimensionale Verformung.

Die in Fig. 8 gezeigte Verbundplatte 10 weist zwei Kernplatten bzw. eine zweilagige Kernplatte mit versetzten und miteinander verklebten Kernlagen 12a, b auf.

## Patentansprüche

1. Verbundplatte aus wenigstens einer ein- oder beidseitig mit einer Deckschicht (14, 16) verklebten Kernplatte (12) aus Kunststoff,
**dadurch gekennzeichnet, dass**
die Kernplatte/n (12) eine Vielzahl von Öffnungen (18) aufweist/aufweisen.

2. Verbundplatte nach Anspruch 1, **dadurch gekennzeichnet, dass** die Kernplatte (12) aus einer oder mehreren Lagen besteht.

3. Verbundplatte nach Anspruch 1 oder2, **dadurch gekennzeichnet, dass** die Öffnungen (18) regelmässig über die Oberfläche der Kernplatte/n (12) verteilt angeordnet sind.

4. Verbundplatte nach einem der Ansprüche 1 bis 3, **dadurch gekennzeichnet, dass** die Öffnungen (18) in der/den Kernplatte/n (12) ausgestanzt sind.

5. Verbundplatte nach Anspruch 4, **dadurch gekennzeichnet, dass** die ausgestanzte Gesamtfläche der Löcher (18) wenigstens 15 %, vorzugsweise 40 bis 60 %, insbesondere etwa 50 % der Gesamtoberfläche der Kernplatte/n (12) entspricht.

6. Verbundplatte nach einem der Ansprüche 1 bis 3, **dadurch gekennzeichnet, dass** die Öffnungen (18) in der/den Kernplatte/n (12) durch Stege (26) getrennte Zwischenräume der mit Einschnitten (17) versehenen und gedehnten Kernplatte/n (12) sind.

7. Verbundplatte nach Anspruch 6, **dadurch gekennzeichnet, dass** die Gesamtfläche der durch Dehnung entstandenen Öffnungen (18) wenigstens 15 %, vorzugsweise etwa 50 % der Gesamtoberfläche der Kernplatte/n (12) entspricht.

8. Verbundplatte nach einem der Ansprüche 1 bis 7, **dadurch gekennzeichnet, dass** dem Kunststoff der Kernplatte/n (12) Füllstoffe, insbesondere flammhemmende Zusätze oder Löschmittel beigemischt sind.

9. Verbundplatte nach einem der Ansprüche 1 bis 7, **dadurch gekennzeichnet, dass** die Öffnungen (18) in der Kernplatte (12) mit flammhemmenden Zusätzen (20), mit Löschmitteln oder mit anderen Füllstoffen gefüllt sind.

10. Verbundplatte nach einem der Ansprüche 1 bis 9, **dadurch gekennzeichnet, dass** die Kernplatte/n (12) aus Kunststoffen mit polyolefinischer Basis und hohem Anteil an mineralischen Füllstoffen, gegebenenfalls mit flammhemmenden Zusätzen, besteht/bestehen.

11. Verbundplatte nach einem der Ansprüche 1 bis 10, **dadurch gekennzeichnet, dass** sie aus wenigstens einer beidseitig mit einer Deckschicht (14, 16) verklebten Kernplatte (12) aus Kunststoff besteht.

12. Verbundplatte nach einem der Ansprüche 1 bis 11, **dadurch gekennzeichnet, dass** die Deckschichten (14, 16) aus Kunststoff, Papier, Metall, insbesondere aus Aluminium oder einer Aluminiumlegierung, oder aus einem Laminat der vorstehend genannten Werkstoffe bestehen.

13. Verbundplatte nach Anspruch 12, **dadurch gekennzeichnet, dass** die Deckschichten (14, 16) mit einem Primer oder einem Haftvermittler beschichtet sind.

14. Verbundplatte nach einem der Ansprüche 1 bis 13, **dadurch gekennzeichnet, dass** die Öffnungen (18) in der/den Kernplatte/n (12) als nicht durchgängige Vertiefungen ausgeführt sind.
